# EUROPEAN PATENT APPLICATION

(11) **EP 3 156 755 A1**
(43) Date of publication of application: **19.04.2017**
(21) Application number: 16721057.4
(22) Date of filing: 04.02.2016
(51) Int. Cl.: F41J 3/02, F41J 3/00, F41J 5/14, A63F 13/837, A63F 13/795, A63F 13/85, A63F 13/46

(54) **METHOD, APPARATUS, AND COMPUTER PROGRAM STORED IN COMPUTER-READABLE MEDIUM FOR PROVIDING DART GAME MATCH-UP MODE WITH VIRTUAL PLAYER**

(30) Priority: 18.08.2015 KR 20150116344
(71) Applicant: Hong International Corp., Seoul 08390 (KR)
(72) Inventor: HONG, Sang Uk, Seoul 06075 (KR)
(74) Representative: Onsagers AS
(86) International application number: PCT/KR2016/001209
(87) International publication number: WO 2017/030256

(57) **Abstract**

Provided are a method and an apparatus for providing a dart game match-up mode played together with a virtual player. The dart game apparatus includes: a controller providing a dart game match-up mode which a plurality of players including at least one virtual player and at least one real player is capable of performing; a sensing unit sensing a hit location of a dart pin thrown from at least one real player; and a display unit outputting a dart game image for the dart game match-up mode.

## Description

### [Technical Field]

The present disclosure relates to a dart game apparatus, and more particularly, is to provide a user with a dart game match-up mode to play a game together with a virtual player.

### [Background Art]

In general, a dart refers to a 'small arrow' and is a game that makes marks by throwing an arrow-shaped dart to a centrifugal target marked with figures. The dart game has an advantage in that anyone can enjoy the dart game at any time and anywhere if there are only an arrowheaded dart and the dart target. In recent years, as the dart game has been developed as worldwide leisure due to development of various game methods and arrangement of a scoring method, any adults and children have conveniently enjoyed the dart game.

In general, participants of the dart game need to participate in the game at the same time and in the same space in order to enjoy the dart game. However, with the development of communication technology, electronic dart game apparatuses have been developed in which each of the participants of the dart game may remotely participate in the dart game so as to participate in the game over temporal and spatial constraints and remotely transmit a play result or a play process thereof through a communication network. The electronic dart game apparatuses may electrically sense a hitting point of the dart target and automatically aggregate scores and provide the aggregated scores to a player.

In the dart game, the game is played by each player or by a team constituted by two or more players and the resulting scores are aggregated to determine winning or losing. Therefore, competition among individual or team players may be a primary factor of the game.

Therefore, the need for a virtual dart game match-up mode may be present in the art in order to intensify an interesting element in order to be absorbed in the game while playing the dart game.

### [Disclosure]

### [Technical Problem]

The present disclosure is contrived to correspond to the aforementioned background art and the present disclosure is to provide a dart game match-up mode in a dart game apparatus.

The present disclosure is to provide a dart game match-up mode to play a game regardless of the number of real players by playing the game together with a virtual player.

### [Technical Solution]

Among embodiments of the present disclosure for solving the aforementioned problem, a first aspect may provide a dart game apparatus including: a controller providing a dart game match-up mode which a plurality of players including at least one virtual player and at least one real player is capable of performing; a sensing unit sensing a hit location of a dart pin thrown from at least one real player; and a display unit outputting a dart game image for the dart game match-up mode.

### [Advantageous Effects]

The present disclosure is contrived to correspond to the aforementioned background art and the present disclosure can provide a dart game match-up mode in a dart game apparatus.

The present disclosure can provide a player with a dart game match-up mode to play a game regardless of the number of real players by playing the game together with a virtual player.

### [Description of Drawings]

Various aspects are now described with reference to the drawings and like reference numerals are generally used to designate like elements. In the following embodiments, for description, multiple specific detailed matters are presented to provide general understanding of one or more aspects. However, it will be apparent that the aspect(s) can be executed without the detailed matters. In other examples, known structures and apparatuses are illustrated in a block diagram form in order to facilitate description of one or more aspects.
FIG. 1 is a block diagram of a dart game apparatus according to an embodiment of the present disclosure.
FIG. 2 is a perspective view of the dart game apparatus according to the embodiment of the present disclosure.
FIG. 3 is a conceptual diagram of a dart game network including a plurality of dart game apparatuses and servers according to the embodiment of the present disclosure.
FIG. 4 illustrates a dart target according to the embodiment of the present disclosure.
FIG. 5 is a flowchart for describing a dart game match-up mode according to an embodiment of the present disclosure.
FIG. 6 is a diagram for describing an embodiment of a first image among embodiments of the present disclosure.
FIG. 7 is a diagram for describing an embodiment of a third image among the embodiments of the present disclosure.
FIG. 8 is a diagram illustrating an image associated with dart pin throwing by a virtual player among the embodiments of the present disclosure.
FIG. 9 is a diagram for describing an embodiment of selecting the virtual player among the embodiments of the present disclosure.
FIG. 10 is a diagram for describing a dart game play of the virtual player among the embodiments of the present disclosure.
FIG. 11 is a diagram for describing an accuracy rate of the virtual player among the embodiments of the present disclosure.
FIG. 12 is a diagram for describing setting the accuracy rate of the virtual player to an asymmetric probability distribution among the embodiments of the present disclosure.

### [Best Mode]

Various embodiments will now be described with reference to the drawings and similar reference numerals are used to represent similar elements throughout the drawings. In the specification, various descriptions are presented to provide appreciation of the present disclosure. However, it is apparent that the embodiments can be executed without the specific description. In other examples, known structures and apparatuses are presented in a block diagram form in order to facilitate description of the embodiments.

"Component", "module", "system", and the like which are terms used in the specification designate a computer-related entity, hardware, firmware, software, and a combination of the software and the hardware, or execution of the software. For example, the component may be a processing process executed on a processor, the processor, an object, an execution thread, a program, and/or a computer, but is not limited thereto. For example, both an application executed in a computing device and the computing device may be the components. One or more components may reside in the processor and/or execution thread and one component may be localized in one computer or distributed among two or more computers. Further, the components may be executed by various computer-readable media having various data structures, which are stored therein. The components may perform communication through local and/or remote processing according to a signal (for example, data through other system and a network such as the Internet through data and/or a signal from one component that interacts with other components in a local system and a distribution system) having one or more data packets, for example.

The description of the presented embodiments is provided so that those skilled in the art of the present disclosure use or implement the present disclosure. Various modifications of the embodiments will be apparent to those skilled in the art and general principles defined herein can be applied to other embodiments without departing from the scope of the present disclosure. Therefore, the present disclosure is not limited to the embodiments presented herein, but should be analyzed within the widest range which is consistent with the principles and new features presented herein.

Terms "dart" and "dart pin" used in the specification may be often used to be exchanged with each other. Furthermore, terms "player" and "user" used in the specification may also oftenbe often used to be exchanged with each other. Moreover, terms "point" and "area" used in the specification may also often be often used to be exchanged with each other.

Further, terms "display" and "monitor" used in the specification may also be often used to be exchanged with each other.

In addition, a term ""player"" used in the specification may include a ""real player"" and a ""virtual player"". The real player actually exists and means a user that plays a dart game. The virtual player means a player that does not actually exist and may play the dart game by using a dart game apparatus.

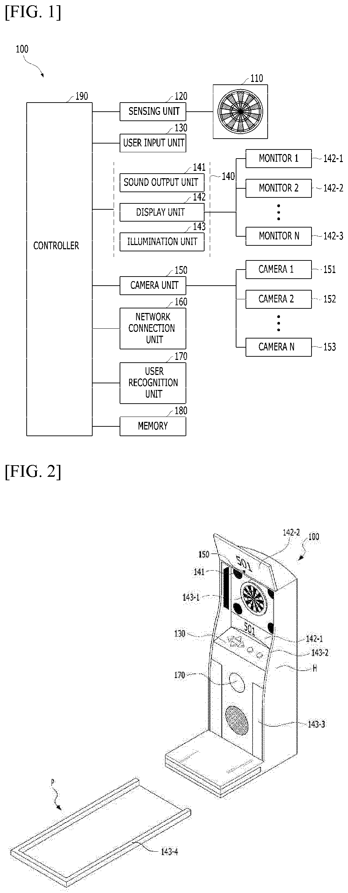

FIG. 1 is a block diagram of a dart game apparatus according to an embodiment of the present disclosure.

The dart game apparatus 100 may include a dart target 110, a sensing unit 120, a user input unit 130, an output unit 140, a camera unit 150, a communication unit 160, a user recognition unit 170, a memory 180, a controller 190, and the like. The components illustrated in FIG. 1 are not essential components. Therefore, a mobile terminal having more components therethan or less components therethan may be implemented.

Hereinafter, the components will be described in sequence.

The dart target 110 may include a score board in which a bulls eye is positioned at the center and there are areas segmented by a concentric circle centering the bulls eye and straight lines extended radially from the bulls eye and granted with individual scores, respectively. Multiple holes into which a tip of a dart may be inserted may be formed on the score board.

The dart target 110 includes a display unit 142 to be described below to variably change score deployment of the dart target 110 and shapes of areas granted with the scores. In this case, the dart target 110 includes a light transmissive touch pad in the display unit 142 to be stacked to have a form of a touch screen.

The sensing unit 120 senses a play of a dart game player (for example, a real player) performed with respect to the dart target 110. The sensing unit 120 may sense a hit location of a dart pin so as to evaluate a play of an actual game player. The sensing unit 120 may sense an area of the dart target 110 which the thrown dart hits, with respect to a play in which the game player throws the dart. The sensing unit 120 electrically converts a score corresponding to the area which the dart hits to transmit the converted score to the controller 190. Further, the controller 190 may obtain a score corresponding to the hit location based on the hit location of the dart, which is obtained from the sensing unit 120.

The user input unit 130 receives an input of a user for controlling the dart game apparatus 100. The user input unit 130 may include a keypad, a dome switch, a touch pad (resistive/capacitive), a jog wheel, a jog switch, and the like. The user input unit 130 may also include cameras 151 to 153, a microphone, or the like.

The user input unit 130 may also include a short range communication unit (not illustrated). The user input unit 130 may be configured by including the short range communication unit (not illustrated) of the communication unit 160. When the user input unit 130 includes the short range communication unit of the communication unit 160, the user input unit 130 may be configured to receive a user input which is input by an external console device. As the short range communication technology, Bluetooth, radio frequency identification (RFID), infrared data association (IrDA), ultra wideband (UWB), ZigBee, or the like may be used.

For example, when the user input unit 130 performs the short range communication using the infrared data communication (IrDA), the external console device may be an infrared remote controller. Alternatively, when the user input unit 130 performs the short range communication using a Bluetooth function, the external console device may be a mobile device including a Bluetooth module. The mobile device including the Bluetooth module may be, for example, a smart phone including the Bluetooth module.

A user may select a dart game mode, the number of dart game players, a dart game play mode, and the like through the user input unit 130. For example, the user may select the number of dart game players, the dart game play scheme (a zero one game, a cricket game, and the like), and the dart game mode (a single play, a network play, and the like) through the user input unit 130. Further, according to an embodiment of the present disclosure, the user may select the virtual player through the user input unit 130.

In addition, the user may select the dart game match-up mode to play the game together with the virtual player through the user input unit 130. For example, the user may select a ""With mode"" to play the same game as the virtual player through the user input unit 130 or a ""Vs mode"" to play the game as a different team from the virtual player.

The user input unit 130 receives a signal by sensing a key operation or a touch input of the user or receives a voice or motion through the cameras 151 to 153 or the microphone of the user to convert the received signal, voice, or motion into an input signal. To this end, known speech recognition or motion recognition technologies may be used.

The output unit 140 which is used for generating an output related with sight, hearing, or touch may include a sound output unit 141, a display unit 142, an illumination unit 143, and the like.

The sound output unit 141 may output audio data received from the communication unit 160 or stored in the memory 180 in a game sound effect, a game motion guide, a game method description, and the like. The sound output unit 141 may also output a sound signal related with a function (e.g., a game effect sound) performed by the dart game apparatus 100. The sound output unit 141 may also output a voice of a game player or a third person using another dart game apparatus, which is received through the communication unit 160. The sound output unit 141 may include a receiver, a speaker, a buzzer, and the like.

The display unit 142 displays (outputs) information processed in the dart game apparatus 100. For example, when the dart game apparatus 100 is in a game play mode guidance mode, the display unit 142 may output a selectable game play mode. When the dart game apparatus 100 is playing the game, the display unit 142 may output an image acquired by photographing the game player or the third person using another dart game apparatus received through the communication unit 160.

Further, the display unit 142 may display a dart game image. According to an embodiment of the present disclosure, the dart game image may include a dart game play image of a real person, a dart game play animation image of a character of the real person, a dart game play animation image of a virtual character, and an image acquired by displaying an image in which dart pins are hit on the dart target for each team.

Further, the display unit 142 may include a plurality of monitors 142-1, 142-2, and 142-3. According to another embodiment of the present disclosure, a first monitor outputs the dart game play image and a second monitor may output a dart game image related with the dart game play image output from the first monitor, or each monitor may output the dart game image for each team. The plurality of monitors 142-1, 142-2, and 142-3 included in the display unit 142 will be described below.

The display unit 142 may include at least one of a liquid crystal display (LCD), a thin film transistor-liquid crystal display (TFT LCD), an organic light-emitting diode (OLED), a flexible display, and a 3D display.

Some of the displays may be configured as a transparent or light transmissive type to view the outside through the displays. This may be called a transparent display and a representative example of the transparent display includes a transparent OLED (TOLED), and the like.

According to an implementation form of the dart game apparatus 100, the display unit 142 may include a plurality of monitors. For example, in the dart game apparatus 100, the plurality of monitors may be separated from each other on one surface or integrally disposed, and further, disposed on different surfaces, respectively. For example, the display unit 142 may include both a monitor 142-2 disposed at an upper end of the dart target 110 and a monitor 142-1 disposed at a lower end of the dart target 110, or may include one monitor thereof. However, a location where the aforementioned monitors are disposed is an example, and the monitor may be disposed at various positions for a demand due to a design or a visual effect.

A touch sensor may be configured to convert pressure applied to a specific portion of the display unit 142 or a change in capacitance generated at the specific portion of the display unit 142 into an electrical input signal. The touch sensor may be configured to detect touch pressure as well as touched location and area.

When there is a touch input for the touch sensor, a signal(s) corresponding to the touch input is(are) sent to a touch controller. The touch controller processes the signal(s) and thereafter, transmits data corresponding thereto to the controller 190. As a result, the controller 190 may know which area of the display unit 142 is touched.

The illumination unit 143 outputs a signal for notifying occurrence of an event of the dart game apparatus 100. Examples of the event which occurs from the dart game apparatus 100 include identification of the dart game player, direct hit of the dart, a change of the dart game player, game over, and the like. The illumination unit 143 may include a light emission diode (LED) and notify the occurrence of the event to the user through flickering of the LED.

The LEDs are disposed on the bottom of the dart target 110 to be flickered according to a flickering pattern which is pre-stored according to the occurrence of the event. For example, one or more LEDs may be allocated to respective parts of the dart target 110. The allocated LEDs are disposed on the bottom of the dart target 110 and may be disposed in a direction oriented toward the outside of the dart game apparatus 100. When the LEDs irradiate light, the light irradiated by the LEDs may pass through the dart target 110 made of a transparent or translucent material to transfer a visual output to the user. Alternatively, the light irradiated by the LEDs may transfer the visual output to the user through a gap existing in the dart target 110.

The output unit 140 may also output another form other than a video signal or an audio signal, for example, a signal for notifying the occurrence of the event by vibration.

The camera unit 150 includes multiple cameras 151 to 153, and as a result, an image frame processed by the cameras 151 to 153 may be stored in the memory 180 or transmitted to the outside through the communication unit 160. Two or more camera units 150 may be provided according to a use environment.

At least some cameras of the camera unit 150 may be disposed to photograph an image frame including the dart target 110 and other cameras may be disposed to photograph an image frame directly related with a game rule in the dart game play. For example, the camera may be disposed to photograph a throw-line on which the dart is thrown in order to photograph the image frame directly related with the dart game rule. The plurality of cameras 151 to 153 included in the camera unit 150 may be disposed to photograph at least some image frames to overlap with each other.

When the camera unit 150 includes one camera, the camera may be a panorama camera disposed to photograph both at least a part of the dart target 110 and the image frame (e.g., the throw-line in the dart game) directly related with the game rule.

The communication unit 160 may include one or more modules that enable wireless communication between the dart game apparatus 100 and a wired/wireless communication system or between the dart game apparatus 100 and a network on which the dart game apparatus 100 is positioned.

The communication unit 160 may include a wired/wireless Internet module for accessing the network. As the wireless Internet technology, wireless LAN (WLAN) (Wi-Fi), wireless broadband (Wibro), world interoperability for microwave access (Wimax), high speed downlink packet access (HSDPA), or the like, may be used. As the wired Internet technology, digital subscriber line (XDSL), fibers to the home (FTTH), power line communication (PLC), or the like may be used.

Further, the communication unit 160 includes a short-range communication unit to transmit and receive data to and from an electronic apparatus positioned in a comparatively short range from the dart game apparatus 100 and including the short-distance communication unit. As the short range communication technology, Bluetooth, radio frequency identification (RFID), infrared data association (IrDA), ultra wideband (UWB), ZigBee, or the like may be used.

The communication unit 160 may sense a connection state of the network and a transceiving speed of the network.

Data received through the communication unit 160 may be output through the output unit 140, stored through the memory 180, or transmitted to other electronic apparatuses positioned in a short range through the short-range communication unit.

According to an embodiment of the present disclosure, the dart game apparatus 100 may provide a dart game match-up mode including at least one player which plays the game at a remote area through the communication unit 160.

The user recognition unit 170 recognizes unique information of a long-range user by using a radio wave through the radio frequency identification (RFID) technology which is a kind of short range communication technology. For example, the user may possess a card, a mobile terminal, or unique dart game equipment, for example, his/her own personal dart equipment, which includes an RFID module. Information (e.g., a personal ID, an identification code, and the like of the user registered in the database server (DB) (see FIG. 2)) for identifying the user may be recorded in the RFID module possessed by the user. The dart game apparatus 100 may identify the RFID module possessed by the user to identify a dart game player which plays the game by using the dart game apparatus 100 and update a database for the identified dart game player or accumulate new data.

The user recognition unit 170 may include various technologies (e.g., the short-range communication technology including the Bluetooth, and the like) that may transmit and receive unique information of the user by a contact/non-contact method in addition to the RFID technology. Further, the user recognition unit 170 may include a biodata identification module that identifies biodata (voice, a fingerprint, and a face) of the user by interworking with the microphone of the user input unit 130, the touch pad, the camera unit 150, and the like.

The memory 180 may store a program for an operation of the controller 190 therein and temporarily store input/output data (e.g., a phone book, a message, a still image, a moving picture, or the like) therein. The memory 180 may store data regarding various pattern vibrations and sounds output in the touch input on the touch screen.

The memory 180 may include at least one storage medium of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The dart game apparatus 100 may operate in connection with a web storage performing a storing function of the memory 180 on the Internet.

Further, according to an embodiment of the present disclosure, the memory 180 may store information regarding a virtual player. In the information, rating (ranking and level) information of the virtual player, dart game play image information, propensity information of the virtual player, profile information of the virtual player, accuracy rate information of the virtual player, or the like may be included. The disclosure is just an example, and information required for implementing the virtual player may be stored in the memory 180. The propensity information of the virtual player may mean a play tendency of a player which plays a dart game such as "lack of persistence" and "weakness in tension". The "lack of persistence" may mean a case where the accuracy rate of the virtual player is increased in the early part of the game and then decreased in the late part of the game. The "weakness in tension" may mean a case where the accuracy rate of the virtual player is decreased at the moment of tension such as a reverse chance. The propensity information of the aforementioned virtual player is just an example and may include a game play scheme which may be viewed by a dart game player. Further, the memory 180 may download and store information regarding the virtual player stored in the server. Further, the dart game apparatus 100 may read the information regarding the virtual player stored in the server. The controller 190 generally controls all operations of the dart game apparatus 100. For example, in the case of the dart game, the score sensed through the sensing unit 120 is collected for each game participant, the collected score is transmitted to and received from another dart game apparatus connected through the network, and a game winning/losing record, the score, and the like according to the collected result are recorded.

According to the embodiment of the present disclosure, the controller 190 may select the virtual player. The virtual player may be randomly selected or selected according to the user input and the virtual player is not limited thereto and may be selected by various methods. In this case, the number of virtual players may be plural. According to the embodiment of the present disclosure, the controller 190 may provide a dart game match-up mode which a plurality of players including at least one virtual player and at least one real player may perform.

The controller 190 may provide a dart game match-up mode in which a team including both the virtual player and the real player may play the game together with at least one other team. In this case, the number of virtual players may be one or more and the number of real players may also be one or more.

For example, the controller 190 may provide a dart game match-up mode in which a first real player and a first virtual player constitute one team to play the game and provide a dart game match-up mode in which the first real player, the first virtual player, and a second virtual player constitute the same team to play the game.

Further, the controller 190 may provide a dart game match-up mode in which the first real player and the first virtual player constitute the same team and the second real player and the second virtual player constitute the same team to play the game. In this case, the controller 190 adjusts dart game abilities of the virtual players to adjust a balance of a dart game ability among the respective teams.

Further, the controller 190 may provide a dart game match-up mode in which a team constituted only by the virtual players, a team constituted only by the real players, or a combination thereof may play the game together with at least one other team. In this case, the number of virtual players may be one or more and the number of real players may also be one or more.

For example, the controller 190 may provide a dart game match-up mode in which the first real player and the second real player constitute a first team and the first virtual player and the second virtual player constitute a second team to play the game.

According to the embodiment of the present disclosure, the controller 190 may display in the display unit 142 a predetermined first image set according to a hit location of a dart pin thrown from at least one real player, which is sensed by the sensing unit 120.

The controller 190 may previously set a condition in which the first image is displayed. For example, the controller 190 may set the first image to be displayed when the hit location is a double bull 410, a single bull 420, a triple ring 440, and a double ring 460. The controller 190 may set the first image by receiving the user input and set the first image according to data received from an external device and the controller 190 is not limited thereto.

The controller 190 may obtain information on the hit location of the dart pin thrown by the real player. Herein, the number of real players may be one or more.

For example, the sensing unit 120 may sense whether the hit location of the dart pin thrown by the real player is the double bulls eye 410, the single bulls eye 420, the small single 430, the triple ring 440, the large single 450, or the double ring 460 among areas of the dart target 110 and the controller 190 may obtain the information on the hit location from the sensing unit 120.

The controller 190 may display the first image in the display unit 142 according to the hit location of the dart pin thrown from the real player.

For example, when the hit location is the triple ring 440 and when the hit location is the double bull 410, the first image is previously set to be displayed and when the hit location of the dart pin thrown from the real player is the triple ring 440 or the double bulls eye 410, the controller 190 may display the first image in the display unit 142.

The first image may be an image associated with the virtual player. For example, the first image may be associated with a virtual player constituting the same team as the real player among the virtual players that participate in the dart game. Further, the first image may be associated with a virtual player constituting a different team from the real player among the virtual players that participate in the dart game. In addition, the first image may be associated with at least one of one or more virtual players which do not participate in the dart game but are stored in the dart game apparatus 100.

The first image may include an effect image for the hit location of the thrown dart pin. For example, the fifth image may include an image in which the virtual player appears to cry Triple, an image in which the virtual player appears to cry Double, an image in which the virtual player appears to cry Double bull, and the like and is not limited thereto.

A time when the first image is displayed may be previously set. For example, the first image may be displayed in the display unit 142 simultaneously when the dart pin thrown from the real player reaches the dart target 110 and displayed within a predetermined time after the dart pin reaches the dart target 110 and is not limited thereto.

A display period of the first image may be previously set. For example, the display period of the first image may be previously set between 0.8 seconds and 1.2 seconds so as not to exert a large influence on a progress time of the dart game and is not limited thereto.

The first image may be displayed in a part or the entirety of the display unit 142. For example, the first image may be displayed in a part of a lower left area in the display unit 142. Further, the first image may be displayed in a part of a lower right area in the display unit 142 or in the entirety of the display unit 142 and is not limited thereto.

When the display unit 142 is constituted by a plurality of monitors, the first image may be displayed in each of the plurality of monitors. For example, the first image may be displayed at the same location of each of the plurality of monitors or at different locations of the plurality of respective monitors and is not limited thereto.

According to the embodiment of the present disclosure, from one of one or more real players, according to hit locations of a plurality of dart pins thrown in one round, the controller 190 may allow the display unit 142 to display the second image.

The controller 190 may previously set the case in which the second image is displayed. For example, the controller 190 may calculate the sum of scores of the plurality of dart pins thrown in one round and when the calculated value is larger than a predetermined value, the controller 190 may set the second image to be displayed. For example, when the hit locations of one or more dart pins among the plurality of dart pins thrown in one round correspond to specific areas, the controller 190 may set the second image to be displayed. The controller 190 is not limited thereto and may set the second image to be displayed in the display unit 142 according to the hit locations of the plurality of dart pins thrown in one round in various cases.

The controller 190 may obtain information on hit locations of a plurality of dart pins which the real player throws in one round from the sensing unit 120. For example, when the real player throws the dart pin three times in one round, the controller 190 may obtain from the sensing unit 120 information on hit locations of respective dart pins three times.

The controller 190 may allow the second image to be displayed according to the hit locations of the plurality of dart pins. For example, the controller 190 may calculate the sum of scores which match the hit locations of the plurality of dart pins and when the calculated value is equal to or larger than a predetermined value, the controller 190 may allow the display unit 142 to display the second image. As another example, when areas including hit locations of two dart pins among the hit locations of three dart pins thrown in one round are the same as each other, the controller 190 may allow the display unit 142 to display the second image.

The second image may be an image associated with the virtual player. For example, the second image may be associated with a virtual player constituting the same team as the real player among virtual players that participate in the dart game. Further, the second image may be associated with a virtual player constituting a different team from the real player among the virtual players that participate in the dart game. In addition, the second image may be associated with at least one of one or more virtual players which do not participate in the dart game but are stored in the dart game apparatus 100.

The second image may include award images for hit locations of dart pins thrown in one round. For example, the second image may include an image in which the virtual player appears to cry Nice representing a meaning of praising the real player, an image in which the virtual player appears to cry Good representing a meaning of praising the real player, an image in which the virtual player appears to cry acclamation representing a meaning of celebrating the real player, an image in which the virtual player appears to cry Perfect representing that the real player is perfect, and the like and is not limited thereto.

A time when the second image is displayed may be previously set. For example, the second image may be displayed at a time when one round ends, a time when a predetermined time elapsed after one round ends, or a time when a user input is received after one round ends and is not limited thereto.

A display period of the second image may be previously set. For example, the display period of the second image may be previously set between 0.8 seconds and 1.2 seconds so as not to exert a large influence on a progress time of the dart game and is not limited thereto.

The second image may be displayed in a part or the entirety of the display unit 142. For example, the second image may be displayed in a part of a lower left area in the display unit 142. Further, the second image may be displayed in a part of a lower right area in the display unit 142 or in the entirety of the display unit 142 and is not limited thereto.

When the display unit 142 is constituted by a plurality of monitors, the second image may be displayed in each of the plurality of monitors. For example, the second image may be displayed at the same location of each of the plurality of monitors or at a different location of each of the plurality of monitors and is not limited thereto.

According to the embodiment of the present disclosure, the controller 190 may predict a round of the real player and allow a third image to be displayed in the display unit 142 before the round of the real player starts according to identification information.

The controller 190 may predict the round of the real player. For example, when a first player and a second player perform a dart match-up game and a round of the second player ends, the controller 190 may predict that a round of the first player will start.

The controller 190 may allow the third image to be displayed in the display unit 142 according to identification information of the real player before the round of the real player starts. For example, when the first player and the second player perform the dart match-up game and the round of the second player ends, the controller 190 may allow the third image to be displayed in the display unit 142 before a round of the first player starts according to identification information of the first player.

The identification information means various information associated with the real player. For example, the identification information may include a score point obtained by the real player before a current round starts, points per dart (PPD) of the real player, marks per round (MPR) of the real player, a member grade of the real player, a record of the real player, and the like and is not limited thereto and may include various information associated with the real player.

The third image may be an image associated with the virtual player. For example, the third image may be associated with a virtual player constituting the same team as the real player among the virtual players that participate in the dart game. Further, the third image may be associated with a virtual player constituting a different team from the real player among the virtual players that participate in the dart game. In addition, the third image may be associated with at least one of one or more virtual players which do not participate in the dart game but are stored in the dart game apparatus 100.

The third image may include a Cheer image of the real player. For example, the third image may include an image in which the virtual player appears to cry Fighting, an image in which the virtual player appears to give encouragement, an image in which the virtual player appears to sing a cheer song, and the like and is not limited thereto.

A time when the third image is displayed may be previously set. For example, the third image may be displayed at a time when a predetermined time elapsed after one round ends or at a time when the user input is received after one round ends and is not limited thereto.

A display period of the third image may be previously set. For example, the display period of the third image may be previously set between 0.8 seconds and 1.2 seconds so as not to exert a large influence on a progress time of the dart game and is not limited thereto.

The third image may be displayed in a part or the entirety of the display unit 142. For example, the third image may be displayed in a part of a lower left side in the display unit 142. Further, the third image may be displayed in a part of a lower right side in the display unit 142 or the entirety of the display unit 142 and is not limited thereto.

When the display unit 142 is constituted by the plurality of monitors, the third image may be displayed in each of the plurality of monitors. For example, the third image may be displayed at the same location of each of the plurality of monitors or at a different location of each of the plurality of monitors and is not limited thereto.

According to the embodiment of the present disclosure, the controller 190 may sense the round of the virtual player and while the sensed round of the virtual player is played, the controller 190 may allow the display unit 142 to display an image associated with throwing of the dart pin by the virtual player.

The controller 190 may sense the round of the virtual player. For example, when the first real player and the first virtual player may play the dart match-up mode and a round of the first real player ends, the controller 190 may sense a round of a first virtual player.

The controller 190 may allow the display unit 142 to display a fourth image associated with throwing of the dart pin by the virtual player while the round of the virtual player is played.

The fourth image may include an operating image in which the virtual player throws the dart pin, an image in which the dart pin moves toward the dart target, an image in which the thrown dart pin reaches the dart target, or a combination thereof. For example, when the fourth image is divided into two areas, a first area may include the operating image in which the virtual player throws the dart pin and a second area may include the image in which the thrown dart pin reaches the dart target. Further, the fourth image is divided into three areas, a first area at a right side may include the operating image in which the virtual player throws the dart pin, a second area at the center may include the image in which the thrown dart pin moves toward the dart target, and a third area at a left side may include the image in which the thrown dart pin reaches the dart target.

When the fourth image is divided into a plurality of areas, the respective areas may be simultaneously or sequentially displayed.

For example, the fourth image is divided into three areas, the operating image in which the virtual player throws the dart pin in the first area, the image in which the thrown dart pin moves toward the dart target in the second area, and the image in which the thrown dart pin reaches the dart target in the third area may be simultaneously displayed. Further, the operating image in which the virtual player throws the dart pin in the first area is first displayed, the image in which the thrown dart pin moves toward the dart target in the second area is displayed, and the image in which the thrown dart pin reaches the dart target in the third area may be displayed.

The fourth image may include various effects. For example, the dart pin throwing image included in the fourth image may include a slow effect in which the dart pin slowly moves toward the dart target, an effect in which the moving dart pin glitters, an effect in which the dart pin moves while being closed up, and the like and is not limited thereto and may include various effects.

According to the embodiment of the present disclosure, the controller 190 may allow a predetermined fifth image to be displayed in the display unit 142 according to a hit location of a dart pin thrown from at least one virtual player.

The controller 190 may obtain information on the hit location of the dart pin thrown by the virtual player. Herein, the number of virtual players may be one or more.

For example, the controller 190 may sense whether the hit location of the dart pin thrown by the virtual player is the double bulls eye 410, the single bulls eye 420, the small single 430, the triple ring 440, the large single 450, or the double ring 460 among the areas of the dart target 110.

The controller 190 may allow the fifth image to be displayed in the display unit 142 according to the hit location of the dart pin thrown from the virtual player.

For example, when the hit location is the triple ring 440 and when the hit location is the double bull 410, the fifth image is previously set to be displayed and when the hit location of the dart pin thrown from the virtual player is the triple ring 440 or the double bull 410, the controller 190 may allow the fifth image to be displayed in the display unit 142.

The fifth image may be an image associated with the virtual player. For example, the fifth image may be associated with a virtual player constituting the same team as the virtual player which throws the dart pinamong the virtual players that participate in the dart game. Further, the fifth image may be associated with a virtual player constituting a different team from the player that throws the dart pin among the virtual players that participate in the dart game. In addition, the fifth image may be associated with at least one of one or more virtual players which do not participate in the dart game but are stored in the dart game apparatus 100.

The fifth image may include an effect image for the hit location of the thrown dart pin. For example, the fifth image may include an image in which the virtual player appears to cry Triple, an image in which the virtual player appears to cry Double, an image in which the virtual player appears to cry Double bulls eye, and the like and is not limited thereto.

A time when the fifth image is displayed may be previously set. For example, the fifth image may be displayed in the display unit 142 simultaneously when the dart pin thrown from the virtual player reaches the dart target 110 and displayed within a predetermined time after the dart pin reaches the dart target 110 and is not limited thereto.

A display period of the fifth image may be previously set. For example, the display period of the fifth image may be previously set between 0.8 seconds and 1.2 seconds so as not to exert a large influence on a progress time of the dart game and is not limited thereto.

The fifth image may be displayed in a part or the entirety of the display unit 142. For example, the fifth image may be displayed in a part of a lower left side in the display unit 142. Further, the fifth image may be displayed in a part of a lower right side in the display unit 142 or the entirety of the display unit 142 and is not limited thereto.

When the display unit 142 is constituted by the plurality of monitors, the fifth image may be displayed in each of the plurality of monitors. For example, the fifth image may be displayed at the same location of each of the plurality of monitors or at different locations of the plurality of respective monitors and is not limited thereto.

According to the embodiment of the present disclosure, from one of one or more virtual players, according to the hit locations of the plurality of dart pins thrown in one round, the controller 190 may allow the display unit 142 to display a sixth image.

The controller 190 may obtain information on the hit locations of the plurality of dart pins which the virtual player throws in one round. For example, when the virtual player throws the dart pin three times in one round, the controller 190 may obtain information on hit locations of respective dart pins three times.

The controller 190 may allow the display unit 142 to display the sixth image according to the hit locations of the plurality of dart pins. For example, the controller 190 may calculate the sum of scores which match the hit locations of the plurality of dart pins, respectively, and when the calculated value is equal to or larger than a predetermined value, the controller 190 may allow the display unit 142 to display the sixth image. As another example, when areas including hit locations of two dart pins among the hit locations of three dart pins thrown in one round are the same as each other, the controller 190 may allow the display unit 142 to display the sixth image.

The sixth image may be an image associated with the virtual player. For example, the sixth image may be associated with a virtual player constituting the same team as the virtual player that throws the dart among the virtual players that participate in the dart game. In addition, the sixth image may be associated with a virtual player constituting a team different from the virtual player that throws the dart among the virtual players that participate in the dart game. Further, the sixth image may be associated with at least one of one or more virtual players which do not participate in the dart game but are stored in the dart game apparatus 100 or the virtual player that throws the dart.

The sixth image may include award images for the hit locations of the dart pins thrown in one round. For example, the sixth image may include an image in which the virtual player appears to cry Nice, an image in which the virtual player appears to cry Good, an image in which the virtual player appears to cry acclamation, an image in which the virtual player appears to cry Perfect, and the like and is not limited thereto.

A time when the sixth image is displayed may be previously set. For example, the sixth image may be displayed at a time when one round ends or a time when a predetermined time elapsed after one round ends and is not limited thereto.

A display period of the sixth image may be previously set. For example, the display period of the sixth image may be previously set between 0.8 seconds and 1.2 seconds so as not to exert a large influence on a progress time of the dart game and is not limited thereto.

The sixth image may be displayed in a part or the entirety of the display unit 142. For example, the sixth image may be displayed in a part of a lower left side in the display unit 142. Further, the sixth image may be displayed in a part of a lower right side in the display unit 142 or the entirety of the display unit 142 and is not limited thereto.

When the display unit 142 is constituted by the plurality of monitors, the sixth image may be displayed in each of the plurality of monitors. For example, the sixth image may be displayed at the same location of each of the plurality of monitors or at different locations of the plurality of respective monitors and is not limited thereto.

The controller may perform pattern recognition processing to recognize a motion input, a writing input, and the like performed in the touch screen or the camera as a letter or an image. Further, the controller may perform speech recognition by using a speech-to-text (STT) function to recognize the speech input through the microphone as the letter.

Various embodiments described herein may be implemented in a computer-readable recording medium or a recording medium readable by a device similar to the computer by using, for example, software, hardware, or a combination thereof.

According to hardware implementation, the embodiment described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electric units for performing other functions. In some cases, the embodiments described in the specification may be implemented by the controller 190 itself.

According to software implementation, embodiments such as a procedure and a function described in the specification may be implemented by separate software modules. Each of the software modules may perform one or more functions and operations described in the specification. A software code may be implemented by a software application written by an appropriate program language. The software code may be stored in the memory 180 and executed by the controller 190.

FIG. 2 is a perspective view of a dart game apparatus according to an embodiment of the present disclosure.

As illustrated in FIG. 2, the dart game apparatus 100 according to the embodiment of the present disclosure may be formed by mounting the components illustrated in FIG. 1 in a housing H. A dart target 110, a display unit 142, an illumination unit 143, a sound output unit 141, a camera unit 150, and a user recognition unit 170 may be disposed on the front surface of the dart game apparatus 100.

The dart target 110 may be disposed so that a dead center is positioned at a position (for example, 5 feet 8 inches in a vertical direction from the ground) according to a rule of the dart game. The illumination units 143-1, 143-2, and 143-3 may be disposed at various parts of the dart game apparatus 100 to transfer a visual effect to the player of the dart game apparatus 100.

For example, the illumination unit 143-1 is disposed at the side of the dart target 110 to serve to irradiate an illumination to the dart target 110. The illumination unit 143-1 may also output a predetermined illumination effect according to an event of the dart game. Further, the illumination unit 143-1 may output illumination effects having various colors.

The illumination unit 143-2 may be formed to be extended in a vertical direction along a forward projection of the housing H. Like the illumination unit 143-1, the illumination unit 143-2 may output a predetermined illumination effect according to an event of the dart game and output illumination effects having various colors.

The illumination unit 143-3 may be disposed on the side of the user recognition unit 170. The illumination unit 143-3 may output a predetermined illumination effect according to an event of the dart game and output illumination effects having various colors. Particularly, the illumination unit 143-3 may output an illumination effect for an event related with the user recognition unit 170.

Selectively, the dart game apparatus 100 may include a dart plate P which may be selectively connected with the dart game apparatus 100 and extended in a horizontal direction. The dart plate P may further include an illumination unit 143-4. The dart plate P may be integrally coupled with or selectively attached to or detached from the dart game apparatus 100.

When the dart plate P is integrally coupled with or selectively attached to the dart game apparatus 100, the dart plate P may be electrically connected with the dart game apparatus 100. The illumination unit 143-4 of the dart game apparatus 100 may be disposed along the outside of the dart plate P as illustrated in FIG. 2. One end of the dart plate P may be extended to a place where a throw-line is to be positioned along a distance of the throw-line from the dart target according to a rule of the game. The illumination unit 143-4 may be disposed at a position corresponding to the throw-line. Although not illustrated in FIG. 2, an illumination unit (not illustrated) is disposed at the bottom of the dart target 110 to irradiate an illumination effect in a user direction. The illumination unit (not illustrated) may include a combination of different illumination elements allocated according to each segment configuring the dart target.

The housing H of the dart game apparatus 100 may include the display unit 142 disposed in the user direction. The display unit 142 may display information required to the user according to the progress of the dart game (for example, a collected score, information on a player during playing, a score required for clearing the corresponding game, information of an opposite player which does not play the game, a dart game image, and the like). The display unit 142 may display a visual effect according to an event depending on the progress of the dart game. For example, when the user continuously hits a bulls eye at the dead center of the dart target 110 with three dart throw chances, the display unit 142 may display a pre-stored motion picture corresponding to the corresponding event. The motion picture may be stored in the memory 180 of the dart game apparatus 100 or received from a server through the communication unit 160.

The display unit 142 may provide the user with visual and audible effects according to occurrence of the event by interlocking with the illumination units 143-1, 143-2, 143-3, and 143-4 and the sound output unit 140. In other words, when a predetermined event occurs, the display unit 142, the illumination units 143-1, 143-2, 143-3, and 143-4, and the sound output unit 140 may output an illumination effect, a display effect, and a sound effect with respect to the corresponding event.

In FIG. 2, it is illustrated that the display units 142 are disposed at the lower end and the upper end of the dart target 110, but the number and disposed positions of display units 142 may be variously modified. In an embodiment of the present disclosure, the display unit 142 may include a plurality of monitors 142-1, 142-2, and 142-3.

The user input unit 130 may be configured in a key pad button form as illustrated in FIG. 2. However, as described above, the user input unit 130 may be configured by various types including a touch screen. The user operates a key button of the user input unit 130 to select a mode of a game to be played by the user, a virtual player to be played as a team, and the like.

The sound output unit 141 is disposed on the front surface of the housing H of the dart game apparatus 100 to output a sound. The number and disposed positions of sound output units 141 may also be variously modified.

The camera unit 150 may be mounted on the top of the housing H of the dart game device 100 as illustrated in FIG. 2. The camera unit 150 may include one or more cameras 151 to 153 which may photograph the dart target 110 and the throw line. The image photographed through the camera unit 150 may be transferred to the memory 180. According to an embodiment, only some of the motion pictures photographed by the camera unit 150 may be finally stored in the memory 180 or transferred to a server (not illustrated) through the communication unit 160.

The user recognition unit 170 may be disposed on the front surface of the housing H of the dart game apparatus 100 and include a short range communication unit as illustrated in FIG. 2. The user touches a card for recognizing the user near the user recognition unit 170 to complete user authentication. According to an embodiment of the present disclosure, the controller 190 or the dart game server may select a virtual player based on at least partially information on the authenticated player. For example, the controller 190 may select a virtual player having the same competitive power as the corresponding player based on ranking information of the authenticated player. Further, the controller 190 may select a virtual player which may offset a difference in ability for a real player for each team based on the information of the player for each team.

The contents illustrated in FIG. 2 and the description of the exterior of the aforementioned dart game apparatus 100 are just an example presented for description, and the dart game apparatus 100 according to the present disclosure is not limited to the exterior illustrated in FIG. 2.

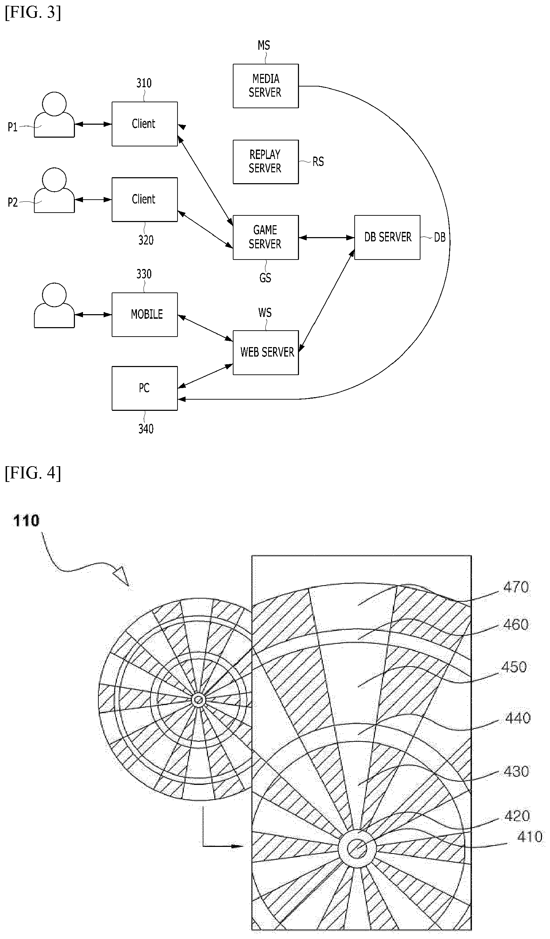

FIG. 3 is a conceptual diagram of a game network including a dart game apparatus according to an embodiment of the present disclosure.

As illustrated in FIG. 3, the dart game apparatus 100 used by a first game player P1 may be connected with one or more servers (a media server MS, a relay server RS, and a dart game server GS) through the network.

The plurality of dart game players may enjoy the dart game in the same space at the same time by using the same first dart game apparatus 100. However, when a second dart game player P2 positioned at a remote range from the first dart game player P1 intends to participate in the dart game, the second dart game player P2 connects one or more servers 209 (the media server MS, the relay server RS, and the dart game server GS) through the network by using the second dart game apparatus 100 to transmit and receive information to and from the first dart game apparatus 100, thereby performing the dart game. The first dart game apparatus 100 and the second dart game apparatus may transmit and receive information via one or more servers (the media server MS, the relay server RS, and the dart game server GS) or the dart game apparatuses 100 and 200 may directly transmit and receive the information therebetween.

According to an embodiment of the present disclosure, the dart game apparatus may provide a dart game match-up mode including at least one player which plays the game at a remote area through the communication unit.

The dart game may be performed by differentiating places at which both dart game players P1 and P2 play the game at the same time or performed by a method in which both dart game players P1 and P2 play the dart game at different places at different times and decides winning/losing or a ranking by storing play contents in the DB server DB.

Further, according to an embodiment of the present disclosure, information regarding a virtual player may be stored in the DB server. In the information, rating (ranking and level) information of the virtual player, dart game play image information, propensity information of the virtual player, profile information of the virtual player, accuracy rate information of the virtual player, or the like may be included. The disclosure is just an example, and information required for implementing the virtual player may be stored in the DB server. The propensity information of the virtual player may mean a play tendency of a player which plays a dart game such as "lack of persistence" and "weakness to tension". The "lack of persistence" may mean a case where the accuracy rate of the virtual player is increased in the early part of the game and then decreased in the later part of the game. The "weakness in tension" may mean a case where the accuracy rate of the virtual player is decreased at the moment of tension such as a reverse chance. The propensity information of the aforementioned virtual player is just an example and may include a game play mode which may be viewed by a dart game player.

The media server MS may store dart game play moving pictures of the dart game players P1 and P2, which are stored by using the camera or the microphone stored in the dart game apparatuses. The media server MS may be included in the DB server DB.

The relay server RS connects communication between the plurality of dart game apparatuses. The relay server RS forms a communication network among the plurality of dart game apparatuses positioned at the remote range to form a peer-to-peer (P2P) network.

The game server GS may exchange information (a score acquired by each game player and information for mutual communication among the respective game players) between the dart game apparatuses, transmit an advantage or a warning based on a game rule through the respective dart game apparatuses, or in addition, perform transmission and reception of information required to perform the dart game and controlling the dart game apparatuses. The dart game server GS aggregates winning/losing of the dart game and scores of the respective dart game players to transmit the aggregated winning/losing and scores to the DB server. Further, according to an embodiment of the present disclosure, the dart game server GS may select players and virtual players which will constitute a team with the player.

The DB server may store personal information of the respective dart game players, winning/losing and ranking information of the game, score information for each game, or a replay moving picture for each game. The DB server may store the information segmented for each user. The DB server may grant a unique code to each user and manage information for each user by using the unique code. The unique code may be stored in the RFID module (an RFID card or an RFID module stored in the mobile terminal) possessed by each user. As a result, the game apparatuses may identify each game player through the included user recognition unit 170. The DB server may also grant the unique code for identification even to the respective dart game apparatuses and manage the dart game data for each identification code granted to the dart game apparatuses.

The game player may access a web server WS by using a mobile 300 (including electronic apparatuses such as a mobile terminal, a cellular phone, a PDA, a PDP, and the like, which have a mobile communication function) or a PC 400. The web server WS may be connected with the mobiles 300 and 400 by an Internet or an Intranet. Further, the web server WS may be connected even with the dart game apparatuses. The web server WS is connected with the DB server DB to provide the dart game data stored in the DB server to the dart game player.

Hereinafter, a representative rule of the dart game and stats of the player associated therewith will be described.

The dart game which may be executed by the dart game device 100 according to the embodiment of the present disclosure may include a 01 game (zero-one game), a cricket game, a count-up game, a match-up mode, and the like.

The 01 game is performed by two teams (alternatively, two players) throwing the dart to the dart target alternately one by one round. One round includes three dart throwing operations. An object of the game is that sum of scores in each round reaches a target score (a score of the unit of 100 or 1000 that generally ends with 01, such as 301, 501, 701, 901, 1101, 1501 points, and the like). The target score and a play round may be arbitrarily adjusted according to the number of players that participate in the round.

In the cricket game, the round is performed by throwing three darts in a first round similarly to the 01 game. The standard cricket game may be performed by using only a bull region at the center of the dart target, and a region having 20, 19, 18, 17, 16, and 15 points. When the corresponding cricket figures are hit with 3 marks, this is marked as a position of the player and when the corresponding cricket figures are hit with 4 marks or more, scores corresponding to the figures are added up to compete the scores. Herein, double regions and triple regions of the dart target may be calculated with 2 marks and 3 marks, respectively. While the corresponding cricket figure is marked as the position of the player, when a counterpart of the player also hits the cricket figure with 3 marks, the corresponding cricket figure is regarded to be closed and no score may be added up any longer. The object of the game may be set to acquire a high score until a regulation round ends or close all cricket figures and acquire a higher score than the counterpart.

The count-up game is a game at which the player wins when acquiring a high score within a predetermined round.

In addition to the aforementioned games, various types of games may be played by the dart game apparatus 100 and the play mode of the dart game apparatus 100 is not limited to the aforementioned game modes.

The stats of the player may be defined according to the corresponding game rule independently from the winning or losing of the count-up game, the cricket game, and the 01 game.

For example, points per dart (PPD) may be calculated by dividing a total score which the player earns by the number of dart drawing times in the 01 game.

Alternatively, marks per round (MPR) may be obtained by calculating the number of marking times of the player in one round. For example, in the cricket game, when the player performs three dart throwing operations in one round and the darts hit 15 triple, 19 single, and 20 double in the three dart throwing operations, respectively, the MPR becomes (3 + 1 + 2)/1 = 6.00 (MPR).

In a subsequent round, when the player performs three dart throwing operations and the darts hit mark fail, 18 double, and 20 bulls eye, the MPR becomes (3 + 1 + 2 + 0 + 2+ 1)/2 =4.5 (MPR).

The PPD and the MPR may also be stored as the stats of the player or personal data of the player. Alternatively, in the count-up game, an average score of the player per game, a highest score record of the player per game, and the like may be stored as the stats of the player.

The dart game apparatus 100 may play the dart game according to the corresponding mode and transmit a game record per player to a game server GS or a DB server DB. The game server GS or DB server DB may calculate the PPD and/or MPR for each player according to the corresponding game record and store the calculated PPD and/or MPR as accumulated PPD and/or MPR stats of the player. Further, the game server GS or the DB server DB may individually store the game record of the player. For example, in the 01 game, the count-up game, or the cricket game which the player played in the past, the game server GS or the DB server DB may record information on a segment part of a dart which the player hits each dart throwing. The game server GS or DB server DB may store accumulated (average) PPD and/or MPR data and highest PPD and/or MPR data of the player.

The game server GS or the DB server DB may be two physically separated servers. Alternatively, the game server GS or the DB server DB may be one physically integrated server and be distinguished according to roles performed in the server. Further, as described above, one server may serve as both the game server GS and the DB server DB.

The game server GS or the DB server DB may store personal stats of the player and rating (alternatively, grade) may be granted to the player according to the corresponding stats.

FIG. 4 illustrates a dart target according to the embodiment of the present disclosure.

The dart target 110 has a plurality of score regions. Referring to FIG. 4, in one aspect of the present disclosure, in the plurality of score regions, a double bulls eye 410 and a single bulls eye 420, a small single having a fan-shaped small single 430 adjacent thereto, a triple ring 440 adjacent thereto, a large single 450 adjacent thereto, a double ring 460 adjacent thereto, and an outside area 470 at an outermost edge are positioned in a concentric circle shape according to a distance from the center of the dart target.

Hereinafter, the dart game apparatus providing a team dart game match-up mode according to an embodiment of the present disclosure will be described in more detail.

The controller 190 of the dart game apparatus may provide the dart game match-up mode among a plurality of teams each constituted by one or more players. The dart game match-up mode may be a dart game mode in which at least one among the players includes the virtual player. Further, each team may include at least one virtual player.

The virtual player may be a player adjusted through artificial intelligence (AI). An accurate rate for the dart target of the virtual player may be different according to a level, random, or different according to a situation in which the virtual player is placed and/or a predetermined play tendency of the virtual player.

For example, it is assumed that the virtual player needs to hit triple 15 points. In this case, the accuracy rate of the virtual player may form a concentric circle based on the triple 15 points. A probability that a high-level virtual player will hit triple 15 points may be high and a probability that the high-level virtual player will hit an adjacent score region may be rapidly lowered as being farther from the triple 15 points. However, a probability that a low-level virtual player will hit triple 15 points is lower than the probability in the case of the high-level virtual player and an accuracy probability may be gradually lowered as being farther from triple 15 points. Therefore, the probability that the low-level virtual player will accurately hit triple 15 points may be lower than the probability in the case of the high-level virtual player. In this case, the dart game apparatus 100 may correct a level difference of an actual match-up dart game player to provide a more interesting dart game match-up mode. The above description is just an example and the dart game match-up mode may include various methods that set the accuracy rate according to the level of the virtual player.

Further, for example, the virtual player may randomly hit the score region of the dart target 110. In this case, since the team dart game match-up mode is performed by a fortune, a user may play the game more excitingly.

Further, the virtual player may vary according to a progress situation of the game and/or a predetermined play tendency of the virtual player. For example, an ability of the virtual player may be adjusted according to a current situation of the team including the virtual player, a predetermined tendency of the virtual player, an ability of the real player included in the same team as the virtual player, abilities of players included in a team different from the virtual player, abilities of one or more virtual players included in the different team from the virtual player, or a combination thereof.

In detail, it is assumed that when the player accurately hits 17 point tripling in the 01 game, the player wins the victory. In this case, a virtual player having a tendency of "weak to tension" is nervous at an important time when the winning or losing is decided by one throwing operation, and as a result, the accuracy rate for triple 17 points may be rapidly lowered. Further, a virtual player having a tendency of "lack of persistence" shows a high accuracy rate at an early stage of the match-up dart game and the accurate rate may be lowered at the time of starting a second half. The aforementioned situations and tendencies are just an example and the accuracy rate of the virtual player may be configured by reflecting variation of accuracy rate depending on a situation of a real dart game player and/or accuracy rate depending on a game play tendency so that the dart game player further feels reality. In this case, the dart game apparatus 100 may provide a more realistic virtual team mate to the player of the dart game match-up mode and the dart game player may play the match-up dart game mode more realistically.

The controller 190 aggregates scores of respective players of each team for each team and compares team scores to decide the winning or losing, in the team dart game match-up mode. Further, the controller 190 determines whether each team member achieves an object of the 01 game for each team and compares the number of team members that achieve the object of the 01 game for each team to decide the winning or losing, in the case of the 01 game mode. The controller 190 compares a sum total of scores acquired by the team members for each team according to each game mode or compares the number of team members that achieve an object of a specific game mode for each team to decide the winning or losing. Further, the controller 190 compares whether a score acquired by aggregating the scores of the respective players first reaches a specific score for each team to decide the winning or losing. The above description is just an example and the dart game match-up mode may include an appropriate game mode that may distinguish the winning or losing for each team.

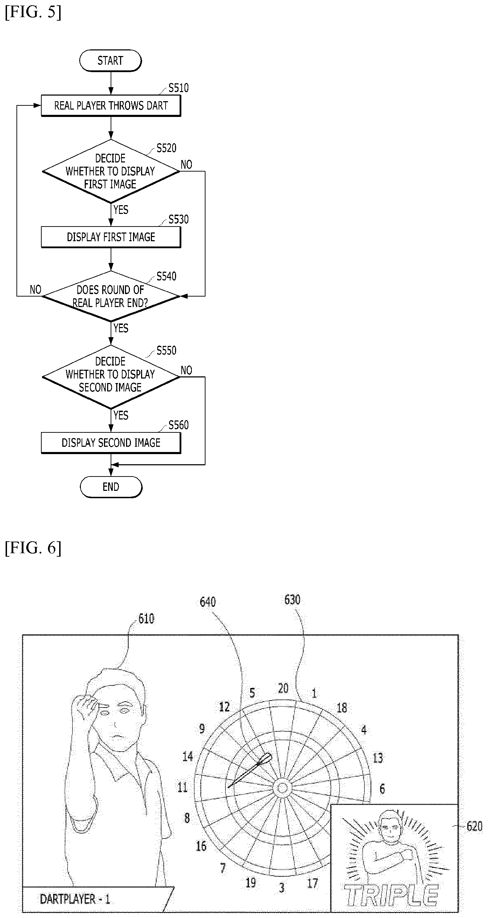

FIG. 5 is a flowchart for describing a dart game match-up mode according to an embodiment of the present disclosure.

The dart game apparatus 100 may provide a dart game match-up mode in which a team constituted by the virtual player and the real player may play the game together with at least one other team. In this case, the number of virtual players may be one or more and the number of real players may be one or more.

For example, the dart game apparatus 100 may provide a dart game match-up mode in which a first real player and a first virtual player constitute the same team to play the game and a dart game match-up mode in which the first real player, the first virtual player, and the second virtual player constitute the same team to play the game.

Further, the dart game apparatus 100 may provide a dart game match-up mode in which a team constituted only by the virtual players, a team constituted only by the real players, or a combination thereof may play the game together with at least one other team. In this case, the number of virtual players may be one or more and the number of real players may be one or more.

For example, the dart game apparatus 100 may provide a dart game match-up mode in which the first real player and the first virtual player constitute a first team and the first virtual player and the second virtual player constitute a second team to play the game.

In step S510, the dart game apparatus 100 may allow the real player to throw the dart. For example, the dart game apparatus 100 displays a word ""Start"" in the display unit 142 to allow the real player to throw the dart.

The dart game apparatus 100 may obtain information on the hit location of the dart pin thrown by the real player. For example, the dart game apparatus 100 may obtain information indicating whether the hit location of the dart pin thrown by the real player is the double bulls eye 410, the single bulls eye 420, the small single 430, the triple ring 440, the large single 450, or the double ring 460 among the areas of the dart target 110.

In step S520, the dart game apparatus 100 may decide whether to display a predetermined first image according to the hit location of the dart pin thrown from the real player. When the dart game apparatus 100 decides displaying the first image, step S530 may be performed and if not, step S540 may be performed.

The dart game apparatus 100 may previously set the case in which the first image is displayed. For example, the controller 190 may set the first image to be displayed when the hit location is the double bulls eye 410, the single bulls eye 420, the triple ring 440, and the double ring 460. The controller 190 may set the first image by receiving the user input and set the first image according to the data from the external device and the controller 190 is not limited thereto.

The dart game apparatus 100 may decide whether to display the first image according to the hit location of the dart pin thrown from the real player.

For example, when the hit location is the triple ring 440 and when the hit location is the double bulls eye 410, the first image is previously set to be displayed and when the hit location of the dart pin thrown from the real player is the triple ring 440 or the double bull 410, the dart game apparatus 100 may decide displaying the first image.

In step S530, the dart game apparatus 100 may display the first image.

The first image may be an image associated with the virtual player. For example, the first image may be associated with a virtual player constituting the same team as the real player among the virtual players that participate in the dart game. Further, the first image may be associated with a virtual player constituting a different team from the real player among the virtual players that participate in the dart game. In addition, the first image may be associated with at least one of one or more virtual players which do not participate in the dart game but are stored in the dart game apparatus 100.

The first image may include an effect image for the hit location of the thrown dart pin. For example, the first image may include an image in which the virtual player appears to cry Triple, an image in which the virtual player appears to cry Double, an image in which the virtual player appears to cry Double bulls eye, and the like and is not limited thereto.

A time when the first image is displayed may be previously set. For example, the first image may be displayed in the display unit 142 simultaneously when the dart pin thrown from the real player reaches the dart target 110 and displayed within a predetermined time after the dart pin reaches the dart target 110 and is not limited thereto.

A display period of the first image may be previously set. For example, the display period of the first image may be previously set between 0.8 seconds and 1.2 seconds so as not to exert a large influence on a progress time of the dart game and is not limited thereto.

The first image may be displayed in a part or the entirety of the display unit 142. For example, the first image may be displayed in a part of a lower left area in the display unit 142. Further, the first image may be displayed in a part of a lower right area in the display unit 142 or the entirety of the display unit 142 and the present disclosure is not limited thereto.

When the display unit 142 is constituted by a plurality of monitors, the first image may be displayed in each of the plurality of monitors. For example, the first image may be displayed at the same location of each of the plurality of monitors or at different locations of the plurality of respective monitors and the present disclosure is not limited thereto.

In step S540, the dart game apparatus 100 may determine whether a current round of the real player ends.

When the dart game apparatus 100 determines that the current round of the real player ends, step S550 may be performed and if not, step S510 may be performed.

In step S550, the dart game apparatus 100 may decide whether to display a second image.

The dart game apparatus 100 may previously set a case in which the second image is displayed. For example, the dart game apparatus 100 may calculate the sum-up of scores of the plurality of dart pins thrown in one round and when the calculated value is larger than a predetermined value, the dart game apparatus 100 may set the second image to be displayed. Further, when the hit locations of one or more dart pins among the plurality of dart pins thrown in one round correspond to the specific areas, the controller 190 may set the second image to be displayed. The dart game apparatus 100 is not limited thereto and may set the second image to be displayed in the display unit 142 according to the hit locations of the plurality of dart pins thrown in one round in various cases.

The dart game apparatus 100 may obtain information on hit locations of a plurality of dart pins which the real player throws in one round from the sensing unit 120. For example, when the real player throws the dart pin three times in one round, the dart game apparatus 100 may obtain from the sensing unit 120 information on hit locations of respective dart pins three times.

The dart game apparatus 100 may decide whether to display the second image according to the hit locations of the plurality of dart pins. For example, the dart game apparatus 100 may calculate the sum-up of scores which match the hit locations of the plurality of dart pins and when the calculated value is equal to or larger than a predetermined value, the dart game apparatus 100 may decide displaying the second image.

As another example, when areas including hit locations of two dart pins among the hit locations of three dart pins thrown in one round are the same as each other, the dart game apparatus 100 may decide displaying the second image.

In step S560, the dart game apparatus 100 may display the second image.

The second image may be an image associated with the virtual player. For example, the second image may be associated with a virtual player constituting the same team as the real player among virtual players that participate in the dart game. Further, the second image may be associated with a virtual player constituting a different team from the real player among the virtual players that participate in the dart game. In addition, the second image may be associated with at least one of one or more virtual players which do not participate in the dart game but are stored in the dart game apparatus 100.

The second image may include award images for hit locations of dart pins thrown in one round. For example, the second image may include an image in which the virtual player appears to cry Nice representing a meaning of praising the real player, an image in which the virtual player appears to cry Good representing a meaning of praising the real player, an image in which the virtual player appears to cry acclamation representing a meaning of celebrating the real player, an image in which the virtual player appears to cry Perfect representing that the real player is perfect, and the like and is not limited thereto.

A time when the second image is displayed may be previously set. For example, the second image may be displayed at a time when one round ends, a time when a predetermined time elapsed after one round ends, or a time when a user input is received after one round ends and is not limited thereto.

A display period of the second image may be previously set. For example, the display period of the second image may be previously set between 0.8 seconds and 1.2 seconds so as not to exert a large influence on a progress time of the dart game and is not limited thereto.

The second image may be displayed in a part or the entirety of the display unit 142. For example, the second image may be displayed in a part of a lower left area in the display unit 142. Further, the second image may be displayed in a part of a lower right area in the display unit 142 or the entirety of the display unit 142 and the present disclosure is not limited thereto.

When the display unit 142 is constituted by a plurality of monitors, the second image may be displayed in each of the plurality of monitors. For example, the second image may be displayed at the same location of each of the plurality of monitors or at different locations of the plurality of respective monitors and the present disclosure is not limited thereto.

FIG. 6 is a diagram for describing an embodiment of a first image among embodiments of the present disclosure.

The dart game apparatus 100 may display the first image in the display unit 142 according to the hit location of the dart pin thrown from the real player. The first image may be an image associated with the virtual player. Herein, the number of virtual players may be one or more.

For example, referring to FIG. 6, the dart game apparatus 100 may display an image in which the virtual player cries acclamation as the first image (602). The first image may be displayed in a part of the display unit.

Further, the dart game apparatus 100 may display the first image 602 together with an image 610 of a real player and a shape 603 of a dart target 630. The shape of the dart target 630 may display a hit location 640 of a dart pin thrown by the real player.

Further, the dart game apparatus 100 may display the first image 620 including a phrase (e.g., ""TRIPLE"") representing the hit location of the dart pin thrown by the real player.

The aforementioned embodiments are just an embodiment of the present disclosure and the dart game apparatus 100 is not limited thereto and may display the first image by various modes.

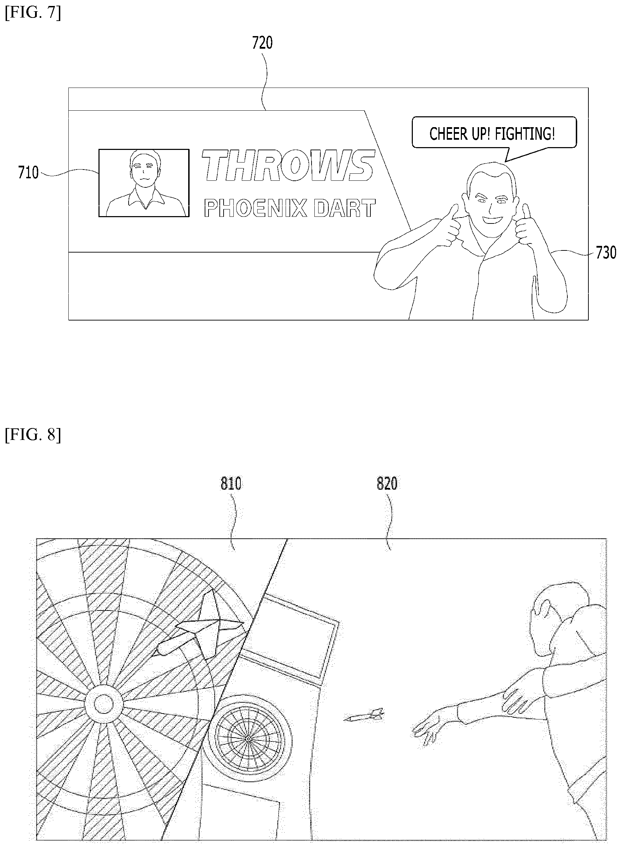

FIG. 7 is a diagram for describing an embodiment of a third image among the embodiments of the present disclosure.

According to the embodiment of the present disclosure, the dart game apparatus 100 may predict a round of the real player and allow a third image to be displayed in the display unit 142 before the round of the real player starts according to identification information.

The dart game apparatus 100 may predict the round of the real player. For example, when a first player and a second player perform a dart match-up game and a round of the second player ends, the dart game apparatus 100 may predict that a round of the first player will start.

The dart game apparatus 100 may allow the third image to be displayed in the display unit 142 before the round of the real player starts according to identification information of the real player. For example, when the first player and the second player perform the dart match-up game and the round of the second player ends, the dart game apparatus 100 may allow the third image to be displayed in the display unit 142 before the round of the first player starts according to identification information of the first player.

The identification information means various information associated with the real player. For example, the identification information may include a score point obtained by the real player before a current round starts, points per dart (PPD) of the real player, marks per round (MPR) of the real player, a member grade of the real player, a record of the real player, and the like and is not limited thereto and may include various information associated with the real player.

The third image may be an image associated with the virtual player. Herein, the number of virtual players may be one or more.

Referring to FIG. 7, the third image may be associated with a virtual player constituting the same team as the real player among the virtual players that participate in the dart game.

Further, the third image may include a cheer word of the virtual player (730) and the second image may include an image in which the virtual player says the cheer phrase and is not limited thereto.

Further, the third image may include a profile image 710 of a next real player. The third image may include identification information of the next real player (720).

FIG. 8 is a diagram illustrating an image associated with dart pin throwing of a virtual player among the embodiments of the present disclosure.

According to the embodiment of the present disclosure, the dart game apparatus 100 may sense the round of the virtual player and while the sensed round of the virtual player is played, the dart game apparatus 100 may display an image associated with throwing of the dart pin by the virtual player.

The dart game apparatus 100 may sense the round of the virtual player. For example, when the first real player and the first virtual player may play the dart match-up mode and the round of the first real player ends, the dart game apparatus 100 may sense the round of the first virtual player.

The dart game apparatus 100 may display an image associated with throwing of a dart pin by the virtual player while the round of the virtual player is played. For example, the dart game apparatus 100 may allow an operating image 820 in which the virtual player throws the dart pin, an image in which the dart pin moves toward the dart target, an image 810 in which the thrown dart pin reaches the dart target, and the like to be displayed in the display unit 142.

The dart game apparatus 100 may sequentially display the image 820 in which the virtual player throws the dart pin, the image in which the dart pin moves toward the dart target, and the image 810 in which the dart pin reaches the dart target according to a time sequence.

Further, the dart game apparatus 100 may simultaneously display the image 820 in which the virtual player throws the dart pin, the image in which the dart pin moves toward the dart target, and the image 810 in which the dart pin reaches the dart target on one screen.

The aforementioned embodiments are just an embodiment of the present disclosure and the dart game apparatus 100 is not limited thereto and may display various images associated with throwing of the dart pin by the virtual player.

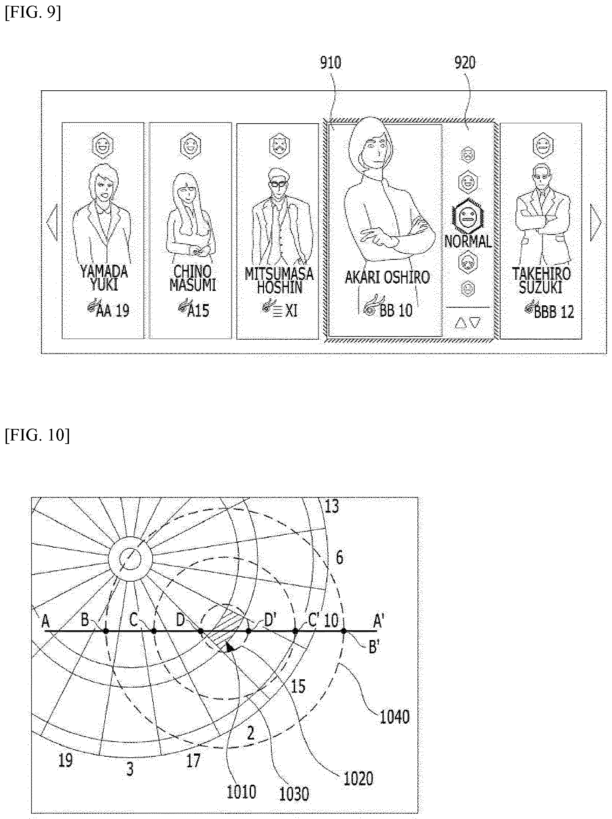

FIG. 9 is a diagram for describing an embodiment of selecting the virtual player among the embodiments of the present disclosure.

The dart game apparatus 100 may display a screen that enables a user to select a virtual player.

For example, the dart game apparatus 100 may display one or more virtual players selectable by the user at least in the form of a card disposed in a transverse direction. Further, the dart game apparatus 100 may dispose one or more virtual players selected by the user in the form of a card disposed in a longitudinal direction and is not limited thereto.

In addition, the dart game apparatus 100 may display a condition 920 of the virtual player on the card of the virtual player selected by the user. The dart game apparatus 100 may display three types or five types of the condition of the virtual player and is not limited thereto and may variously display the condition of the virtual player.

The dart game apparatus 100 may select a virtual player that will participate in the dart game among the displayed virtual players. In this case, the number of virtual players may be one or more.

For example, the dart game apparatus 100 may select at least one virtual player that will participate in the dart game based on the user input among the plurality of displayed virtual players.

When the dart game apparatus 100 selects the virtual player according to the user input, the dart game apparatus 100 may display that the virtual player is selected. For example, the dart game apparatus 100 may display a highlight effect showing that the virtual player is selected on a card contour line of the selected virtual player (910).

The dart game apparatus 100 may provide a dart game match-up mode to play the game together with one or more selected virtual players.

For example, the dart game apparatus 100 may provide a dart game match-up mode in which the first real player and the selected virtual player constitute the same team to play the game.

Further, the dart game apparatus 100 may provide a dart game match-up mode in which the first real player and the second real player constitute a first team and the selected first virtual player and the selected second virtual player constitute a second team to play the game.

FIG. 10 is a diagram for describing a dart game play of the virtual player among the embodiments of the present disclosure.

The dart game apparatus 100 may provide the dart game match-up mode among a plurality of teams constituted by one or more players, respectively. Further, each of the plurality of teams may include at least one virtual player.

A dart game ability of the virtual player may be adjusted by artificial intelligence (AI). For example, the dart game ability of the virtual player may be adjusted according to a level of the real player included in the same team as the virtual player, a situation of the team including the virtual player, a predetermined play tendency of the virtual player, an ability of the real player included in the same team as the virtual player, abilities of players included in a team different from the virtual player, a score obtained by an opposite team to the virtual player, a characteristic of the virtual player, or a combination thereof.

The ability of the virtual player may be previously adjusted and adjusted in real time. For example, the ability of the virtual player may be previously set according to an input of the real player and adjusted in real time while the dart game play is performed.

According to the embodiment referring to FIG. 10, a situation is assumed, in which the virtual player needs to hit triple 15 points 1010.

In this case, the accuracy rate of the virtual player may form concentric circles 1020, 1030, and 1040 based on the triple 15 points. In the case of a virtual player having a high ability, a probability (a probability of hitting an area in the concentric circle 1020) of hitting the triple 15 points is high and a probability (a probability of hitting an area outside the concentric circle 1020) of hitting an adjacent score area may be lowered rapidly according to the concentric circle as being farther from the triple 15 points.

For example, when a probability that the virtual player will throw the dart into the concentric circle 1020 is X, a probability of throwing the dart between the concentric circle 1020 and the concentric circle 1030 is X/16, a probability of throwing the dart on the concentric circle 1040 in the concentric circle 1030 is X/32, a probability of throwing the dart outside the concentric circle 1040 is X/64, and the like and the accuracy rate may be lowered rapidly according to the concentric circle as being farther from a target.

However, in the case of a virtual player having a low ability, the probability (the probability of hitting the area in the concentric circle 1020) of hitting the triple 15 points is lower than that of the virtual player having the high ability and the accuracy probability may be gradually lowered as being farther from the triple 15 points.

For example, when the probability that the virtual player will throw the dart into the concentric circle 1020 is Y, the probability of throwing the dart between the concentric circle 1020 and the concentric circle 1030 is Y/2, the probability of throwing the dart on the concentric circle 1040 in the concentric circle 1030 is Y/4, the probability of throwing the dart outside the concentric circle 1040 is Y/8, and the like and the accuracy rate may be lowered gradually according to the concentric circle as being farther from the target.

Therefore, the probability (the probability of hitting the area in the concentric circle 1020) that the virtual player having the low ability will accurately hit the triple 15 points may be lower than the probability of the virtual player having the high ability.

In this case, the dart game apparatus 100 may correct a difference in level among the real players by approximately controlling the ability of the virtual player.

For example, the dart game apparatus 100 adjusts the ability of the virtual player included in the team of the real player having the relatively higher ability to have a high level and adjusts the ability of the virtual player included in the team of the real player having the relatively lower ability to have a low level to correct the difference in level among the real players. As a result, the real players may play an exciting dart game match-up mode.

According to another embodiment referring to FIG. 10, a situation is assumed, in which the virtual player needs to hit the triple 15 points 1010.

In this case, a virtual player having a tendency of "weak to tension" is nervous at an important time when the win or loss is decided by one throwing operation, and as a result, the accuracy rate (the probability of hitting the area in the concentric circle 1020 in all areas) for the triple 15 points 1010 may be rapidly lowered.

Further, in the case of a virtual player having a propensity of "strong to match", at an important time when the win or loss is decided by one throwing operation, and as a result, the accuracy rate (the probability of hitting the area in the concentric circle 1020 in all areas) for the triple 15 points 1010 may be rapidly increased.

The aforementioned embodiments are just an example of the present disclosure and are not limited thereto and the ability of the virtual player may be adjusted in real time according to various situations.

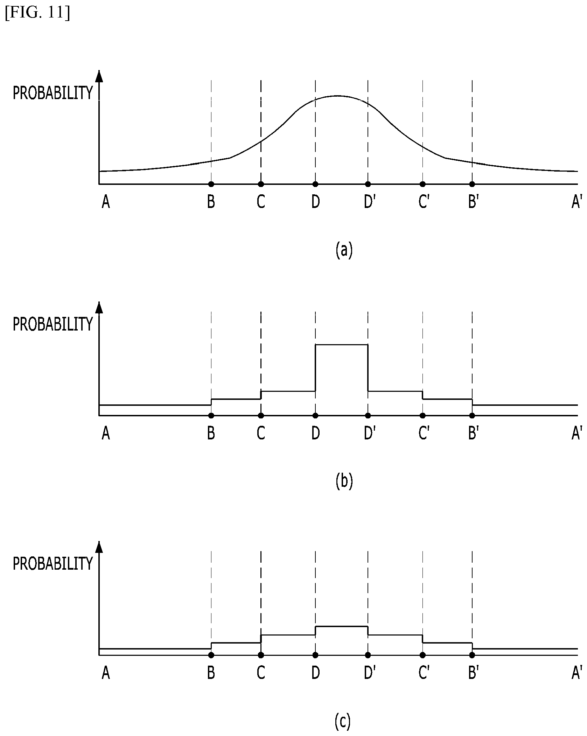

FIG. 11 is a diagram for describing an accuracy rate of the virtual player among the embodiments of the present disclosure.

Referring to FIG. 11 (a), the accuracy rate of the virtual player may vary according to a regular distribution curve.

For example, referring to FIG. 10, when the virtual player needs to hit the triple 15 points 1010, a cross-sectional view of the accuracy rate of the virtual player may be shown in FIG. 11 (a). The accuracy rate of the virtual player is highest between D and D? and as being farther from the dart target 1010, the accuracy rate may be lowered according to the regular distribution curve.

Referring to FIG. 11 (a), the accuracy rate of the virtual player may vary in a step form.

For example, referring to FIG. 10, when the virtual player needs to hit the triple 15 points 1010, the cross-sectional view of the accuracy rate of the virtual player may be shown in FIG. 11(b). The accuracy rate of the virtual player is highest between D and D? and as being farther from the dart target 1010, the accuracy rate may be lowered in the step form.

Referring to FIGS. 11(b) and 11(c), the ability of the virtual player may vary. For example, referring to FIG. 10, when the virtual player needs to hit the triple 15 points 1010, the accuracy rate of the virtual player having the high ability may be shown in FIG. 11(b). That is, in the case of the virtual player having the high ability, the probability (the probability of hitting the area in the concentric circle 1020) of hitting the triple 15 points is high and the probability (the probability of hitting the area outside the concentric circle 1020) of hitting the adjacent score area may be lowered rapidly according to the concentric circle as being farther from the triple 15 points.

Further, referring to FIG. 10, when the virtual player needs to hit the triple 15 points 1010, the accuracy rate of the virtual player having the low ability may be shown in FIG. 11(c). In the case of the virtual player having the low ability, the probability (the probability of hitting the area in the concentric circle 1020) of hitting the triple 15 pointsis lower than that of the virtual player having the high ability and the accuracy probability may be gradually lowered as being farther from the triple 15 points.

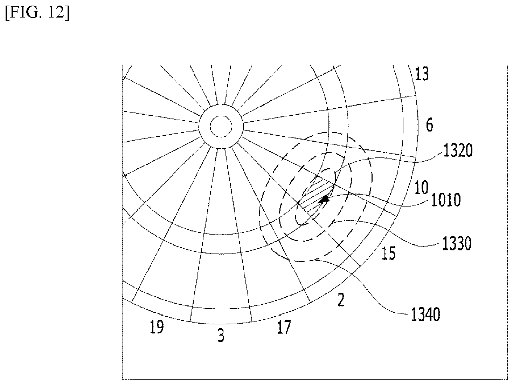

FIG. 12 is a diagram for describing setting the accuracy rate of the virtual player to an asymmetric probability distribution among the embodiments of the present disclosure.

The accuracy rate for the dart target by the virtual player may vary depending on the characteristic of the virtual player and the characteristic of the virtual player may include a dart pin throwing tendency of the virtual player. The dart pin throwing tendency means a habit in which the player throws the dart pin. For example, when the player frequently throws the dart pin in a forward direction, the dart pin throwing tendency of the player may be the forward direction. Further, when the player frequently throws the dart pin at an angled direction, the dart pin throwing tendency of the player may be the angled direction.

The dart pin throwing tendency of the virtual player may be predetermined. For example, when the first virtual player is a virtual player created by reflecting the first real player and a statistic dart pin throwing tendency of the first real player is the angled direction, the dart pin throwing tendency of the first virtual player may be the angled direction.

Further, the dart pin throwing tendency may vary depending on an input of the real player. For example, when the real player selects the dart pin throwing tendency of the virtual player as the angled direction, the dart pin throwing tendency of the virtual player may be set as the angled direction.

Further, the dart pin throwing tendency may vary depending on data received from an external device. For example, when the dart game apparatus 100 receives information on the dart pin throwing tendency of the virtual player from the external device, the dart game apparatus 100 may set the dart pin throwing tendency of the virtual player based on the received information.

The dart pin throwing tendency of the virtual player may be previously set before the dart game starts and set while the dart game is performed and modified in real time as the dart game is performed.

The accuracy rate for the dart target by the virtual player may vary depending on the dart pin throwing tendency of the virtual player. For example, when the dart pin throwing tendency of the virtual player is the forward direction, the accuracy rate for the dart target by the virtual player may be set according to a symmetric probability distribution and when the dart pin throwing tendency of the virtual player is the angled direction, the accuracy rate for the dart target by the virtual player may be set according to an asymmetric probability distribution.

For example, when the dart pin throwing tendency of the virtual player is the forward direction, the accuracy rate of the virtual player may vary according to the concentric circle. For example, when the dart pin throwing tendency of the virtual player is the angled direction, the accuracy rate of the virtual player may vary according to an angled oval.

According to the embodiment referring to FIG. 10, the situation is assumed, in which the virtual player needs to hit triple 15 points 1010 (it is assumed that the dart pin throwing tendency of the virtual player is the forward direction).

In this case, the accuracy rate of the virtual player may vary depending on the concentric circles 1020, 1030, and 1040 based on the triple 15 points. The probability (the probability of hitting an area in the concentric circle 1020) that the dart pin thrown by the virtual player will hit the triple 15 points is relatively high and the probability (the probability of hitting an area outside the concentric circle 1020) that the dart pin will hit the adjacent score area may be relatively lowered according to the concentric circle as being farther from the triple 15 points.

According to the embodiment referring to FIG. 12, the situation is assumed, in which the virtual player needs to hit triple 15 points 1010 (it is assumed that the dart pin throwing tendency of the virtual player is the angled direction).

In this case, the accuracy rate of the virtual player may vary depending on asymmetric ovals 1320, 1330, and 1340 based on the triple 15 points. The probability (the probability of hitting an area in the concentric circle 1320) that the dart pin thrown by the virtual player will hit the triple 15 points is relatively high and the probability (the probability of hitting an area outside the concentric circle 1320) that the dart pin will hit the adjacent score area may be relatively lowered according to the angled oval as being farther from the triple 15 points.

The aforementioned embodiments are just an example and are not limited thereto and the dart game apparatus 100 may set the accuracy rate for the dart target by the virtual player under various situations by various methods.

The embodiment of the present disclosure may be implemented even in the form of a recording medium including a command executable by a computer such as a program module executed by the computer. A computer readable medium may be a predetermined available medium accessible by the computer or includes all of volatile and non-volatile media and removable and irremovable media. Further, the computer readable medium may include both a computer storage medium and a communication medium. The computer storage medium includes all of the volatile and non-volatile and removable and irremovable media implemented by a predetermined method or technology for storing information such as a computer readable command, a data structure, a program module, or other data. The communication medium typically includes the computer readable command, the data structure, the program module, or other data of a modulated data signal such as a carrier, or other transmission mechanisms and includes a predetermined information transfer medium.

The description of the present disclosure is used for illustration and those skilled in the art will understand that the present disclosure can be easily modified to other detailed forms without changing the technical spirit or an essential feature thereof. Therefore, it should be appreciated that the aforementioned embodiments are all illustrative in all aspects and are not limited. For example, each component described as a single type may be implemented to be distributed and similarly, components described to be distributed may also be implemented in a combined form.

The scope of the present disclosure is represented by the claims to be described below rather than the detailed description, and it is to be interpreted that the meaning and scope of the claims and all the changes or modified forms derived from the equivalents thereof come within the scope of the present disclosure.

### [Mode for Invention]

Contents associated with a best mode for carrying out the present disclosure have been described.

### [Industrial Applicability]

The present disclosure can be used in a digital device, a dart device, a dart game device, an entertainment device, a dart server, and the like.

## Claims

1. A dart game apparatus comprising:
a controller providing a dart game match-up mode which a plurality of players including at least one virtual player and at least one real player is capable of performing;
a sensing unit sensing a hit location of a dart pin thrown from at least one real player; and
a display unit outputting a dart game image for the dart game match-up mode.

2. The dart game apparatus of claim 1, wherein the controller additionally provides a dart game match-up mode among a plurality of teams, and
at least one team among the plurality of teams includes at least one virtual player and at least one real player.

3. The dart game apparatus of claim 1, wherein the controller additionally provides the dart game match-up mode among the plurality of teams, and
the plurality of teams includes a team constituted by at least one virtual player and a team constituted by at least one real player.

4. The dart game apparatus of claim 1, wherein the controller additionally allows the display unit to display a predetermined first image according to the hit location of the dart pin thrown from at least one real player sensed by the sensing unit, and
the first image is associated with at least one of one or more virtual players.

5. The dart game apparatus of claim 1, wherein the sensing unit additionally senses hit locations of a plurality of dart pins thrown in one round from one among one or more real players,
the controller additionally allows the display unit to display a second image based on the hit locations of the plurality of dart pins, and
the second image is associated with at least one of one or more virtual players.

6. The dart game apparatus of claim 4, wherein the controller additionally allows the display unit to display the first image for a time of 0.8 seconds or more and 1.2 seconds or less.

7. The dart game apparatus of claim 1, wherein the controller additionally allows the display unit to display a third image based on identification information of one player among one or more real players,
the third image is displayed before a round of one player starts, and
the third image is associated with at least one of one or more virtual players.

8. The dart game apparatus of claim 1, wherein the controller additionally senses the round of at least one virtual player and allows the display unit to display a fourth image associated with throwing of the dart pin by at least one virtual player in the round of at least one virtual player.

9. The dart game apparatus of claim 8, wherein the controller additionally allows the display unit to display the fourth image of at least one virtual player as a slow image.

10. The dart game apparatus of claim 8, wherein the controller additionally decides the hit location of the dart pin thrown from at least one virtual player and allows the display unit to display a predetermined fifth image according to the hit location of the dart pin, and
the predetermined fifth image is associated with at least one of one or more virtual players.

11. The dart game apparatus of claim 8, wherein the controller additionally decides information on hit locations of a plurality of dart pins thrown in one round from at least one virtual player and allows the display unit to display a predetermined sixth image according to the hit locations of the dart pins, and
the predetermined sixth image is associated with at least one of one or more virtual players.

12. A method for providing a dart game match-up mode in a dart game apparatus, the method comprising:
providing a dart game match-up mode which a plurality of players including at least one virtual player and at least one real player is capable of performing;
sensing a hit location of a dart pin thrown from at least one real player; and
outputting a dart game image for the dart game match-up mode.

13. A computer program stored in a computer readable recording medium, wherein the computer program includes following commands for allowing the computer to provide a dart game match-up mode, and
the commands include
a command for providing a dart game match-up mode which a plurality of players including at least one virtual player and at least one real player is capable of performing;
a command for sensing a hit location of a dart pin thrown from at least one real player; and
a command for outputting a dart game image for the dart game match-up mode.
